Europäisches Patentamt

European Patent Office

Office européen des brevets

(11) Veröffentlichungsnummer: **0 282 857**
**A2**

(12) **EUROPÄISCHE PATENTANMELDUNG**

(21) Anmeldenummer: **88103490.4**

(22) Anmeldetag: **07.03.88**

(51) Int. Cl.⁴: **H04M 1/00**

(30) Priorität: **20.03.87 DE 3709171**

(43) Veröffentlichungstag der Anmeldung:
**21.09.88 Patentblatt 88/38**

(84) Benannte Vertragsstaaten:
**AT BE CH DE ES FR GB IT LI LU NL**

(71) Anmelder: **Standard Elektrik Lorenz Aktiengesellschaft Lorenzstrasse 10 D-7000 Stuttgart 40(DE)**

(72) Erfinder: **Goldhorn, Bruno Narrenbergstrasse 1 D-7531 Keltern-Dietlingen(DE)**
Erfinder: **Stapelfeldt, Rolf Goethering 53 D-7537 Remchingen-Singen(DE)**

(74) Vertreter: **Gähr, Hans-Dieter, Dipl.-Ing. (FH) et al Standard Elektrik Lorenz AG Patent- und Lizenzwesen Postfach 30 09 29 D-7000 Stuttgart 30(DE)**

(54) **Mobilfunkgerät.**

㊼ Das Mobilfunkgerät hat ein quaderförmiges Gehäuse (1) zum Einbau in das Armaturenbrett eines Kraftwagens. Der Handapparat mit Wähltastatur kann quer liegend mit seinen beiden Muscheln in Halterungen (8) an der Frontplatte (2) des Gehäuses (1) einrastend gehaltert werden. Zwischen den beiden Halterungen (8) ist eine Bandkassettenaufnahme (6) mit Laufwerk und Bedienelementen (7) angeordnet zum Besprechen und Abhören von Kassetten über den Handapparat oder zum Mitschneiden von Telefongesprächen.

EP 0 282 857 A2

## Mobilfunkgerät

Die Erfindung betrifft ein Mobilfunkgerät, insbesondere Autotelefon, nach dem Oberbegriff des Anspruchs 1.

Aus der DE-OS 34 10 477 ist beispielsweise ein derartiges Mobilfunkgerät bekannnt, das ein quaderförmiges Gehäuse zum Einbau in das Armaturenbrett eines Kraftwagens hat. Der Handapparat ist quer liegend mit seinen beiden Muscheln an der Frontplatte des Gehäuses einrastend gehalten. Die Tasten auf der Außenseite des Handapparates sind in dieser Lage lesbar und bedienbar. Durch ein Schloß im Handapparat kann das Gerät stromlos geschaltet und der Handapparat in der Halterung blockiert werden.

Der Erfindung liegt die Aufgabe zugrunde, einem solchen Mobilfunkgerät die Funktion eines elektronischen Notizbuches zuzuordnen. Gelöst wird diese Aufgabe durch die im Kennzeichen des Anspruchs 1 angegebenen Merkmale. Die Anordnung hat den Vorteil, daß die oft während des Autofahrens benötigte Funktion elektronisches Notizbuch oder Diktiergerät im Autotelefon verfügbar ist und nicht als separates System mitgeführt werden muß.

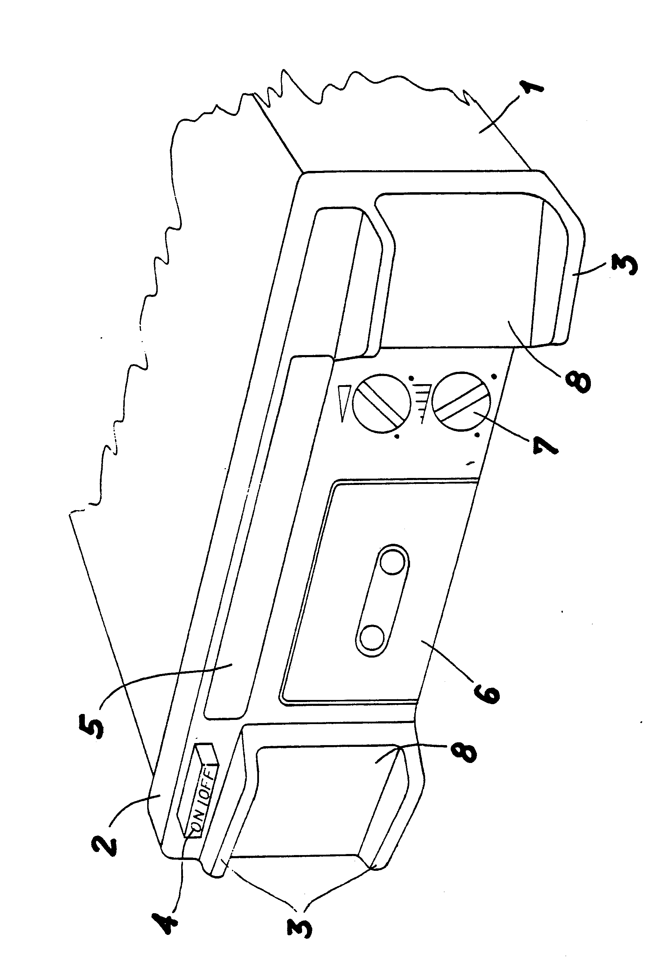

Die Erfindung wird anhand eines Ausführungsbeispieles beschrieben, das in der zugehörigen Zeichnung dargestellt ist. Die Figur zeigt ein Autotelefon mit Bandkassettenaufnahme in der Frontplatte, ohne Handapparat in perspektivischer Ansicht, schräg nach vorn.

Das quaderförmige Gehäuse 1 des Gerätes ist nur teilweise abgebildet. Die das Gehäuse vorn abschließende Frontplatte 2 ist rechteckig und im unteren Teil mit einer Aufnahme für den Telefon-Handapparat versehen, der abgenommen und deshalb nicht gezeigt ist. Der Handapparat kann dem gleichen, der in der DE-OS 34 10 477 beschrieben ist. Das Gehäuse 1 entspricht in Form und Größe dem eines handelsüblichen Autoradios, das zum Einbau in das Armaturenbrett eines Kraftwagens geeignet ist. Ähnliches gilt auch für die Frontplatte 2, die im Grundriß der eines solchen Autoradios entspricht.

Der Handapparat wird beim Ablegen in einer Aufnahme der Frontplatte 2 eingerastet, die aus zwei Halterungen 8 für die Hör-und die Sprechmuschel des Handapparates besteht und deshalb links und rechts an der Frontplatte schmale Rippen 3 als Führung aufweist, zwischen die der Handapparat eingefügt wird und die dann über und unter dessen Hör-und Sprechmuscheln liegen. In diesem Bereich sind auch die nicht dargestellten Rastelemente zum Halten des Handapparates angebracht. Über der linken oberen Rippe sitzt der Hauptschalter 4, daneben in der Mitte der Frontplatte 2 eine Anzeige 5. Unter dieser Anzeige sind eine Bandkassettenaufnahme 6 mit Laufwerk und daneben Bedienelemente 7 zum An-und Abschalten und zur Lautstärkeregelung angeordnet. Das Besprechen der Kassette erfolgt über den Handapparat, Telefongespräche können mitgeschnitten und die Kassette über den Handapparat abgehört werden.

## Ansprüche

1. Mobilfunkgerät, insbesondere Autotelefon, mit Wähltastatur und Handapparat, **dadurch gekennzeichnet,** daß in der Frontplatte (2) des Gerätes eine Bandkassettenaufnahme (6) mit Laufwerk und mit Bedienelementen (7) angeordnet ist.

2. Mobilfunkgerät nach Anspruch 1, dadurch gekennzeichnet, daß die Bandkassettenaufnahme (6) derart angebracht ist, daß die Ebene der Kassette parallel zur Ebene der Frontplatte (2) verläuft.

3. Mobilfunkgerät nach Anspruch 1, dadurch gekennzeichnet, daß eine Kassette in der Bandkassettenaufnahme (6) durch den Handapparat besprechbar und abhörbar ist.

4. Mobilfunkgerät nach Anspruch 3, dadurch gekennzeichnet, daß Telefongespräche mit der Bandkassettenaufnahme (6) aufnehmbar sind.

0 282 857